# EUROPÄISCHE PATENTSCHRIFT

(11) **EP 2 039 631 B1**
(45) Veröffentlichungstag und Bekanntmachung des Hinweises auf die Patenterteilung: **15.06.2011**
(21) Anmeldenummer: 08450127.9
(22) Anmeldetag: 04.09.2008
(51) Int. Cl.: B65G 33/06

(54) **Separationsvorrichtung**
Separation device
Dispositif de séparation

(30) Priorität: 05.09.2007 AT 13822007
(43) Veröffentlichungstag der Anmeldung: 25.03.2009
(73) Patentinhaber: Springer Maschinenfabrik AG, 9360 Friesach (AT)
(72) Erfinder: Pichler, Bernhard, 9360 Friesach (AT)
(74) Vertreter: Gibler & Poth Patentanwälte OG

(56) Entgegenhaltungen:
- DE-A1- 3 912 008
- US-A- 3 168 183
- US-A1- 2002 060 135

## Beschreibung

Die Erfindung betrifft ein Transportsystem umfassend eine Separationsvorrichtung gemäß dem Oberbegriff des Patentanspruches 1.

Die DE 39 12 008 A beschreibt eine Vereinzelungsvorrichtung für Rundhölzer, in welcher die Rundhölzer im Quertransport gefördert werden.

Die US 3 168 183 A zeigt eine Auswurfvorrichtung zum Auswerfen von im Quertransport gefördertem länglichen Stückgut.

Die DE 101 51 971 A zeigt eine Vereinzelungsvorrichtung zur Baumstammindexierung. Derartige Separationsvorrichtungen sind bei dem Übergang von einem Quertransport in einen Längstransport der länglichen Stückgüter bekannt. Bei diesen Separationsvorrichtungen werden die Stückgüter am Ende des Quertransporters angehalten und von einer Wurfeinrichtung in den Längstransporter geworfen. Nachteilig dabei ist, dass eine hohe Beanspruchung des Stückgutes und der Anlage auftritt.

Aufgabe der Erfindung ist es daher ein Transportsystem umfassend eine Separationsvorrichtung der eingangs genannten Art anzugeben, mit welcher die genannten Nachteile vermieden werden können, mit welcher eine zuverlässige Separation und Übergabe des Stückgutes erfolgen kann, wobei der zeitliche Abstand zwischen der Abgabe zweier aufeinanderfolgender Stückgüter zumindest in einem Bereich verändert und vorgegeben werden kann. Weitere Aufgabe ist es eine Separationsvorrichtung anzugeben, bei der der Übergang von einem Quertransport in einen Längstransport einfach, schnell, stückgut- und anlageschonend erfolgen kann.

Erfindungsgemäß wird dies durch die Merkmale des Patentanspruches 1 erreicht.

Dadurch ergibt sich der Vorteil, dass jeweils eines der Stückgüter in einer Führung der Schraubenförderer aufgenommen werden kann, wobei die Bewegung des Stückgutes durch eine kontinuierliche Rotation der Schraubenförderer erfolgt, wobei die auf die Anlage wirkenden Kräfte durch den Betrieb der Schraubenförderer gering sind. Das Stückgut kann im Wesentlichen gleichförmig bewegt werden, wodurch auch die auf das Stückgut wirkenden Kräfte, insbesondere durch eine Beschleunigung gering gehalten werden können. Durch eine Veränderung der Rotationsgeschwindigkeiten der Schraubenförderer kann der Zeitabstand zwischen der Abgabe aufeinanderfolgender Stückgüter verändert werden. Insbesondere bei der Abgabe auf einen Längstransporter kann auf diese Weise der Abstand zwischen Stückgütern auch bei unterschiedlich langen Stückgütern auf dem Längstransporter einfach optimiert und ein hoher Durchsatz sichergestellt werden. Weiters kann durch eine gleichsinnige Rotation der Schraubenförderer ein Antrieb der Stückgüter in Längsrichtung erfolgen. Dieser Antrieb in Längsrichtung kann bei der Übergabe an einen Längstransporter zum Aufbau einer Geschwindigkeitskomponente in Richtung des Längstransporters verwendet werden, wodurch die Beanspruchungen des Stückgutes und der Anlage im Übergangsbereich gering gehalten werden können. Bei anderen Ausführungen kann der Antrieb in Längsrichtung des Stückgutes auch zum Ausrichten des Stückgutes verwendet werden, indem das Stückgut gegen eine Anschlagschiene bewegt wird.

Die Unteransprüche, welche ebenso wie der Patentanspruch 1 gleichzeitig einen Teil der Beschreibung bilden, betreffen weitere vorteilhafte Ausgestaltungen der Erfindung.

In besonders vorteilhafter Weise kann vorgesehen sein, dass die Schraubenförderer einen im Wesentlichen kegelförmigen Grundkörper aufweisen, also dass der Grundkörper der Schraubenförderer im Wesentlichen kegelförmig ausgebildet ist. Vorteilhaft dabei ist, dass die Schraubenförderer mit horizontaler Drehachse angeordnet werden können. Vorteilhaft dabei ist weiters, dass die Fördergeschwindigkeit der länglichen Stückgüter - bei gleichbleibender Drehgeschwindigkeit der Schraubenförderer - zunehmen kann. Durch diese Vorteile kann die Separationsvorrichtung besonders langlebig ausgebildet sein und die separierende Förderung der Stückgüter besonders zuverlässig erfolgen.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 ein Transportsystem umfassend eine Separationsvorrichtung einer bevorzugten Ausführungsform in einer Aufsicht; und
Fig. 2 das Transportsystem gemäß Fig. 1 in einer Seitenansicht.

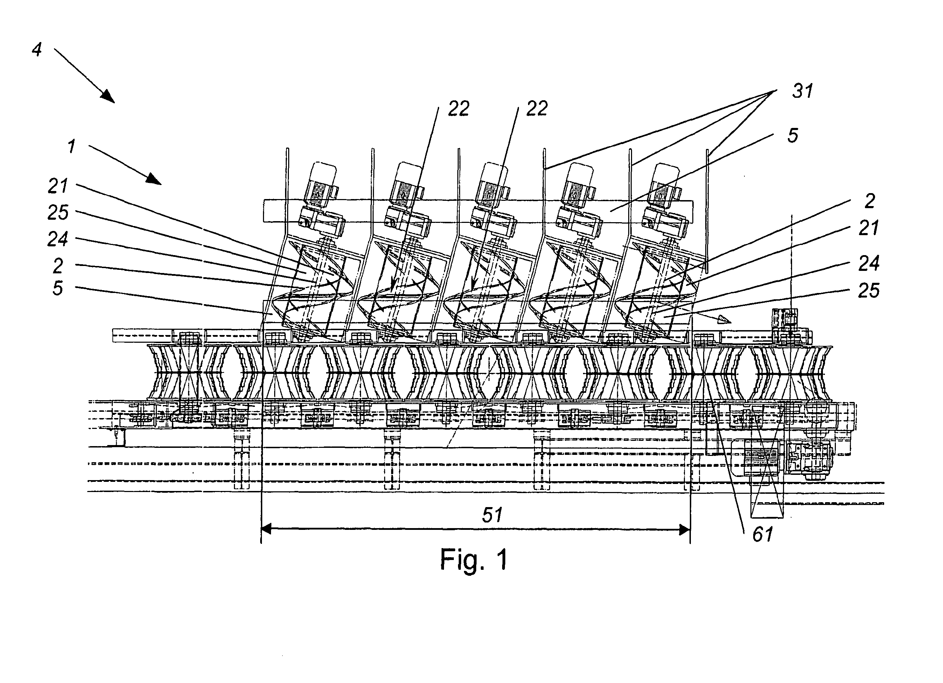

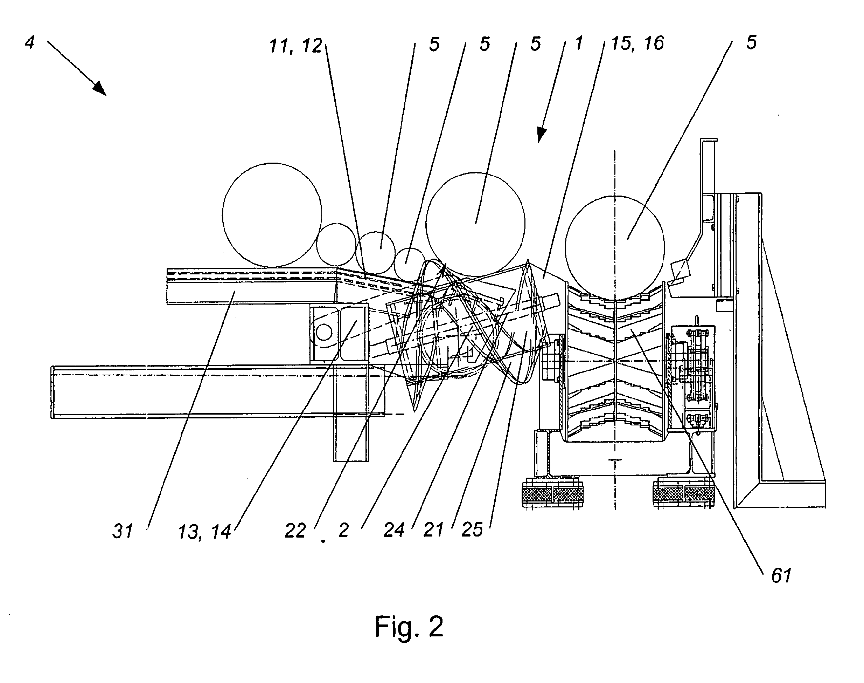

Die Fig. 1 und 2 zeigen eine Separationsvorrichtung 1 für längliches Stückgut 5, umfassend wenigstens zwei nebeneinander angeordnete Schraubenförderer 2, wobei Schraubenflächen 21 der Schraubenförderer 2 wenigstens eine gemeinsame Führung 22 für das längliche Stückgut 5 ausbilden.

Die Separationsvorrichtung 1 hat zur Aufgabe nachfolgend angelieferte, insbesondere längliche, Stückgüter 5 voneinander zu separieren, also zu vereinzeln. Durch die Vereinzelung mittels der Separationsvorrichtung 1 können die mittels eines ersten Förderers nachfolgend angelieferten Stückgüter 5 einzeln auf einen zweiten Förderer übergeben werden, wobei die Stückgüter 5 am oder im ersten Förderer im Wesentlichen einander berührend, angeordnet sein können und wobei die Stückgüter 5 am zweiten Förderer im Wesentlichen beabstandet, insbesondere mit vorbestimmbaren Abstand, zueinander angeordnet sein können. Die beiden Förderer können als Längsförderer und/oder als Querförderer ausgebildet sein. Insbesondere kann als erster Förderer ein erster Querförderer 31 und als zweiter Förderer ein erster Längsförderer 61 ausgebildet sein.

Die Längen der einzelnen Stückgüter 5 können unterschiedlich lang sein. Bevorzugte Ausführungen des länglichen Stückgutes 5 sind Bretter, Profile, Stäbe, Baumstämme und/oder Rundhölzer. Bei anderen Ausführungen können auch andere längliche Stückgüter vorgesehen sein. Das längliche Stückgut 5 kann üblicherweise eine Längserstreckung von einigen Metern aufweisen.

Bevorzugt ist das längliche Stückgut 5 im Wesentlichen geradlinig entlang dessen Längserstreckung ausgebildet. Ebenso bevorzugt ist der Querschnitt entlang der Längserstreckung im Wesentlichen konstant, wie dies beispielsweise bei einem Brett, Balken, Profil, Rohr, Baumstamm und/oder insbesondere bei einem Rundholz gegeben sein kann, wobei der Baumstamm auch entrindet sein kann.

Der Schraubenförderer 2 ist ein bevorzugt längliches Bauteil mit schraubenförmiger Geometrie sowie mit im Wesentlichen geradliniger Längserstreckung und weist zumindest eine Schraubenfläche 21 auf.

Im Betrieb der Separationsvorrichtung 1 wird der Schraubenförderer 2 um eine zur Längserstreckung des Schraubenförderers 2 parallele Achse gedreht, welche die Drehachse 24 des Schraubenförderers 2 ausbildet.

Die Schraubenfläche 21 weist eine Steigung, wobei die Steigung im Wesentlichen der Neigungswinkel der Schraubenfläche 21 zur Drehachse 24 ist, und eine der Steigung und dem Umfang entsprechende Ganghöhe auf. Durch die Steigung wird bei ortsfester Anordnung des Schraubenförderers mittels der Drehbewegung eine Förderrichtung des zu fördernden Stückgutes 5 bewirkt, wobei die Richtung der Förderrichtung unter anderem durch die Ausgestaltung der Schraubenfläche 21 und die Anordnung der Drehachse 24 beeinflusst werden kann.

Der Schraubenförderer 2 weist vorzugsweise eine Längserstreckung zwischen einer und eineinhalb Ganghöhen der Schraubenfläche 21 auf. Derart kann die sichere Separation gewährleistet sein, die Separationsdauer der Stückgüter 5 gering und der Durchsatz der Separationsvorrichtung 1 hoch sein.

Die Schraubenfläche 21 des Schraubenförderers 2 ist üblicherweise als flaches, schraubenförmiges Bauteil, insbesondere als Blech, ausgebildet, wobei das flache Blech an einer Mehrzahl von Stellen mit einem Grundkörper 25 verbunden ist. Fig. 1 und 2 zeigen derartige Schraubenförderer 2, welcher einen im Wesentlichen zylindrischen Grundkörper 25 aufweist.

Bei anderen besonders vorteilhaften Ausführungsformen kann der Schraubenförderer 2 auch einen im Wesentlichen kegelförmigen Grundkörper 25 aufweisen, also im Wesentlichen kegelförmig ausgebildet sein. Im Wesentlichen kegelförmige Grundkörper 25 bilden dabei sämtliche Körper, welche bei deren Rotation um die Drehachse 24 eine Kegelfläche erzeugt. Der kegelförmige Grundköper 25 kann insbesondere als Pyramide, als Pyramidenstumpf, bevorzugt als Kegel, besonders bevorzugt als Kegelstumpf oder durch mehrere geeignet angeordnete Längsstäbe, also mehrere Längsstäbe welche im Wesentlichen entlang der Kegelfläche angeordnet sind, ausgebildet sein. Vorteilhaft dabei ist, dass die Schraubenförderer 2 mit horizontaler Drehachse 24 angeordnet werden können und derart die Schraubenförderer 2 einfach und mit hoher Dauerstandfestigkeit rotierbar gelagert werden können.

Vorteilhafterweise kann vorgesehen sein, dass - in Richtung der Förderrichtung der Separationsvorrichtungen 1 gesehen - der Durchmesser des kegelförmigen Grundkörpers 25 ansteigt und ein Steigungswinkel der Schraubenflächen 21 im Wesentlichen konstant bleibt, wobei eine Ganghöhe des Schraubenförderers 2 - in Richtung der Förderrichtung der Separationsvorrichtungen 1 gesehen - ansteigt. Auf diese Weise kann eine kontinuierliche Beschleunigung des Stückgutes 5 in Richtung seiner Längsachse erfolgen, da die Umfangsgeschwindigkeit des Schraubenförderers 2 bei der Kegelspitze geringer ist und mit zunehmendem Abstand größer wird. Vorteilhaft dabei ist, dass die Fördergeschwindigkeit der länglichen Stückgüter - bei gleichbleibender Drehgeschwindigkeit der Schraubenförderer 2 - ansteigt, wodurch der Abstand unmittelbar hintereinander geförderte Stückgüter 5 mit zunehmender Querförderung entlang der Separationsvorrichtungen 1 zunimmt. Vorteilhaft dabei ist, dass die Ganghöhe des Schraubenförderers 2 am zum ersten Förderer gerichteten Ende der Separationsvorrichtung 1 gering sein kann, womit gewährleistet werden kann, dass zuverlässig lediglich ein Stückgut 5 erfasst wird. Dadurch kann besonders zuverlässig gewährleistet sein, dass die einzelnen Stückgüter 5 voneinander separiert und mit vorbestimmten Abstand zueinander am Förderende der Separationsvorrichtungen 1 ausgegeben oder übergeben werden.

Gemäß der bevorzugten Ausführungsform umfasst die Separationsvorrichtung 1 fünf Schraubenförderer 2, wobei die Abstände zwischen den benachbarten Schraubenförderern 2 vorzugsweise im Wesentlichen konstant sind. Derart können Stückgüter 5 unterschiedlicher Längserstreckung einfach und sicher separiert werden, wobei die Mindestlänge der Stückgüter 5 im Wesentlichen durch den Abstand zweier benachbarter Schraubenförderer 2 bestimmt ist. Die Maximallänge kann durch die Breite der Separationsvorrichtung 1 bestimmt sein, wobei vorgesehen sein kann, dass die Stückgüter 5 seitlich über die Separationsvorrichtung um ein vorgebbares Maß hinausragen können.

Bei anderen Ausführungsformen können auch 2, 3, 4, 6 oder mehr Schraubenförderer in der Separationsvorrichtung ausgebildet sein.

Die gemeinsame Führung 22 ist im Wesentlichen durch mindestens zwei Führungspunkte definiert, wobei jeder der mindestens zwei Schraubenförderer 2 im Wesentlichen einen Führungspunkt zur Führung des Stückgutes 5 aufweist und wobei das Stückgut 5 beim Fördern mittels der Separationsvorrichtung 1 mit mindestens zwei der mindestens zwei Führungspunkte in gleitendem Kontakt steht. In der bevorzugten Ausführungsform sind fünf Schraubenförderer 21 nebeneinander angeordnet. Das Stückgut 5 kann bei der Förderung - je nach Länge und Geometrie des Stückgutes 5 - mit zwei bis fünf Führungspunkten in gleitendem Kontakt stehen.

In der Aufsicht auf die Separationsvorrichtung 1 können die fünf Führungspunkte im Wesentlichen auf einer geraden Linie liegen. Derart kann die gemeinsame Führung 22 im Wesentlichen geradlinig ausgebildet sein. Dadurch ist die Separationsvorrichtung besonders für im Wesentlichen geradlinig längliches Stückgut 5, beispielsweise Bretter, Profile und/oder Baumstämme, geeignet.

In vorteilhafter Weiterbildung kann vorgesehen sein, dass die die Führung 22 ausbildenden Bereiche der Schraubenflächen 21 im Wesentlichen parallel zur Längsrichtung der Führung 22 angeordnet sind. Dies kann in besonders einfacher Weise derart ausgebildet sein, dass die Drehachse 24 der Schraubenförderer 2 zur Längserstreckung des sich in Förderlage befindlichen Stückgutes 5 einen Winkel entsprechend dem rechten Winkel minus der Steigung der Schraubenfläche 21 einschließt. Weiterhin befinden sich in diesem Bereich der Schraubenflächen 21 die zum Kontakt mit dem Stückgut 5 ausgebildeten Führungspunkte.

Bei dieser Anordnung des Schraubenförderers 2 ist die Schraubenfläche 21 im Bereich um den Führungspunkt im Wesentlichen parallel zur Längserstreckung des Stückgutes 2 ausgebildet. Dies ermöglicht den im Wesentlichen parallelen Kontakt zwischen dem Stückgut 5 und der Schraubenfläche 21, wobei eine gute Führung bei geringer Belastung für das Stückgut 5 und die Separationsvorrichtung 1 gewährleistet sein kann.

Alternativ können die die Führung 22 ausbildenden Bereiche der Schraubenflächen 21 mittels beweglicher, insbesondere verdrehbarer und federnd gelagerter, Lamellen entlang der Schraubenfläche 21 ausgebildet sein, wodurch ein sicherer Kontakt auch bei Stückgütern 5 mit nichtkonstantem Querschnitt gewährleistet sein kann.

Durch den gleitenden Kontakt der Schraubenflächen 21 und dem Stückgut 5 in den Führungspunkten wirken auf das Stückgut 5 mehrere Kraftkomponenten. Diese setzen sich zu einer auf das Stückgut 5 wirkenden Gesamtkraftkomponente zusammen, wobei die Gesamtkraftkomponente Komponenten in Richtung normal zur Längserstreckung sowie in Richtung parallel zur Längserstreckung des Stückgutes 5 aufweisen kann. Bei einer Gesamtkraftkomponente in Richtung parallel zur Längserstreckung des Stückgutes 5 kann das Stückgut 5 in Längsrichtung beschleunigt und/oder gefördert werden.

Vorteilhafterweise kann vorgesehen sein, dass die Schraubenförderer 2 - in Betriebslage gesehen - zum Anheben des länglichen Stückgutes 5 ausgebildet sind. Dabei kann zum Anheben die maximale Neigung des Schraubenförderers 2 gegenüber der Waagerechten bis zu 45° betragen, wobei die maximal mögliche Neigung im Wesentlichen durch die Höhenerstreckung der Schraubenfläche 21, also die Erstreckung vom Grundkörper bis zum äußeren Ende der Schraubenfläche in Richtung normal zur Drehachse 24, und die Außengeometrie des zu fördernden Stückgutes 5 begrenzt sein kann.

Gemäß der bevorzugten Ausführungsform beträgt die Neigung zum Anheben in etwa 15°. Alternativ kann die Neigung beispielsweise auch 10° oder 25° betragen, oder die Schneckenförderer 2 können gegenüber der Waagerechten ohne Neigung angeordnet sein.

Bevorzugt können die Drehachsen 24 der Schraubenförderer 2 im Wesentlichen parallel angeordnet sein. Derart können im Wesentlichen identische Schraubenförderer 2 nebeneinander angeordnet und zum Fördern und Separieren des Stückgutes 5 verwendet werden.

Alternativ können nebeneinander Schraubenförderer 2 mit Schraubenflächen 21 unterschiedlicher Steigung angeordnet werden, wobei in diesem Fall die Drehachsen 24 der nebeneinander angeordneten Schraubenförderer 2 bevorzugt nicht parallel angeordnet sind. Derart kann das Stückgut 5 im Schraubenförderer 2 um einen - in der Aufsicht auf die Separationsvorrichtung 1 gesehen - vorbestimmten Winkel verdreht werden.

In einer weiteren alternativen Ausgestaltung des Schraubenförderers 2 kann vorgesehen sein, dass die Steigung der Schraubenfläche 21 mit zunehmendem Abstand zum ersten Förderer, im Wesentlichen kontinuierlich, zunimmt. Derart kann bei konstanter Winkelgeschwindigkeit der Schraubenförderer 2 die Fördergeschwindigkeit des Stückgutes 5, im Wesentlichen kontinuierlich, ansteigen.

Die Fig. 1 und 2 zeigen auch ein Transportsystem 4 für längliches Stückgut 5 mit dem ersten Quertransporter 31, wobei dem ersten Quertransporter 31 - in Transportrichtung gesehen - eine Separationsvorrichtung 2 gemäß der bevorzugten Ausführungsform nachgeschaltet ist.

Die Fig. 1 und 2 zeigen weiters auch ein Transportsystem 4 für längliches Stückgut, wobei die Separationsvorrichtung 2 gemäß der bevorzugten Ausführungsform dem ersten Längstransporter 61 vorgeschaltet ist.

Insbesondere kann in der bevorzugten Ausführungsform der Separationsvorrichtung 2 der erste Quertransporter 31 der Separationsvorrichtung 2 vorgeschalten sowie der erste Längstransporter 61 der Separationsvorrichtung 2 nachgeschalten sein.

In diesem Zusammenhang können die Schraubenförderer 2 im Betrieb insbesondere in die gleiche Richtung rotieren, wobei sich aufgrund des gleitenden Kontaktes zwischen Schraubenflächen 21 und Stückgut 5 im Stückgut 5 eine Gesamtkraftkomponente parallel zur Längserstreckung des Stückgutes 5 ausbildet. Derart wird zusätzlich zur Förderung des Stückgutes 5 quer zu dessen Längserstreckung dieses auch parallel zur Längserstreckung gefördert. Derart kann das Stückgut 5 in Längsrichtung beschleunigt werden, wobei die Relativgeschwindigkeit zwischen der Geschwindigkeit eines Fördermittels des Längstransporters 61 und der Fördergeschwindigkeit Stückgut 5 in Längsrichtung verringert wird. Derart können die Belastungen des Stückgutes 5 und der Anlage bei der Übergabe im Übergangsbereich auf den Längstransporter 61 gering gehalten werden.

Alternativ können der Separationsvorrichtung 2 sowohl Längstransporter vorgeschalten und nachgeschalten, sowohl Quertransporter vorgeschalten und nachgeschalten, also ein erster Quertransporter 31 vorgeschalten und ein zweiter Quertransporter nachgeschalten, oder ein zweiter Längstransporter vorgeschalten sowie ein zweiter Quertransporter nachgeschalten sein.

Vorteilhafterweise kann vorgesehen sein, dass den Schraubenförderern 2 eine Aufnahmeeinrichtung 11 zur Übernahme des länglichen Stückgutes 5 von dem ersten Quertransporter 31 vorgeschaltet ist. Derart kann die geringe Belastung der Separationsvorrichtung und/oder des Transportsystems bei der Übergabe des länglichen Stückgutes 5 von dem vorgeschalteten Förderer gewährleistet sein.

In diesem Zusammenhang kann vorgesehen sein, dass die Aufnahmeeinrichtung 11 als erste Rutsche 12 ausgebildet ist. Die erste Rutsche 12 kann eine besonders einfache Übernahme ermöglichen und gewährleisten, dass die Belastungen der Separationsvorrichtung 1 und/oder des ersten Förderers bei der Übergabe des Stückgutes 5 besonders gering sind.

In vorteilhafter Weiterführung kann vorgesehen sein, dass die Aufnahmeeinrichtung 11 ein Begrenzungselement 13 zur Reduzierung der wirksamen Eingriffslänge der Schraubenförderer 2 in Abhängigkeit von der Querschnittsgröße des Stückgutes 5 aufweist.

Dadurch kann gewährleistet sein, dass die Eingriffslänge der Schraubenförderer 2 im Wesentlichen der maximalen Quererstreckung und/oder dem Durchmesser des Stückgutes 5 entspricht, wobei, insbesondere bei dem Stückgut 5 mit rundem Querschnitt die Eingrifflänge zwischen dem 0,5fachen und dem 1,5fachen Durchmesser betragen kann. Dadurch kann gewährleistet sein, dass lediglich ein Stückgut 5 auf einmal von den Schraubenförderern aufgenommen wird, wodurch eine sichere Vereinzelung der Stückgüter 5 auch bei aufeinanderfolgenden Stückgütern 5 unterschiedlichen Querschnittes gewährleistet sein kann.

In diesem Zusammenhang kann vorgesehen sein, dass das Begrenzungselement 13 ein gefedert gelagertes Hebelineal 14 umfasst, wodurch die Reduzierung der wirksamen Eingriffslänge der Schraubenförderer 2 in Abhängigkeit von der Querschnittsgröße des Stückgutes 5 besonders einfach erfolgen kann. Dies Funktionsweise des Hebelineals 14 kann gemäß der in Fig. 1 und 2 dargestellten bevorzugten Ausführungsform vorteilhafterweise wie folgt ausgebildet sein: Das Stückgut 5 liegt in der ersten Rutsche 12 und würde durch die Schwerkraft in die Separationseinrichtung 1 rutschen. Das Begrenzungselement 13, insbesondere Hebelineal 14, stellt an vorbestimmter Position einen Anschlag für das Stückgut 5 dar, wobei das Stückgut 5 nicht weiter als bis zu diesem Anschlag rutschen kann. Der Abstand zwischen dem dem ersten Förderer zugewandtem Ende des Schraubenförderers 2 und dem Anschlag bildet im Wesentlichen die vorbestimmbare Eingrifflänge des Schraubenförderers 2 aus.

Das Hebelineal 14 kann gefedert sein, sodass sich der Anschlag bei größerem und schererem Stückgut 5 selbsttätig verändert. Auf diese Weise können einfach unterschiedlich große Stückgüter auf einmal gehandhabt werden, wobei sichergestellt werden kann, dass jeweils nur eines der Stückgüter 5 mit der Führung 22 in Eingriff kommt.

Alternativ kann das Begrenzungselement 13 als Aktuator ausgebildet sein und sensorgesteuert das Stückgut 5 bis zu einer vorbestimmten Anlieferstellung führen und/oder vorlassen.

Die Eingrifflänge der Schraubenförderer 2 zueinander ist vorteilhafterweise gleich lange. Derart kann gewährleistet sein, dass das Stückgut 5 der Separationsvorrichtung 1 ausgerichtet übergeben wird.

Vorteilhafterweise kann vorgesehen sein, dass jedem Schraubenförderer 2 zumindest ein Begrenzungselement 13 zugeordnet ist. Derart kann die vorbestimmte Anlieferstellung der Stückgüter 5 auch bei unterschiedlichen Längen der Stückgüter 5 gewährleistet sein.

Vorteilhafterweise kann weiters vorgesehen sein, dass den Schraubenförderern 2 eine Übergabeeinrichtung 15 zur Übergabe des länglichen Stückgutes 5 nachgeschaltet ist. Derart kann die geringe Belastung der Separationsvorrichtung 1 und/oder des Transportsystems bei der Übergabe des länglichen Stückgutes 5 an den nachgeschalteten Förderer gewährleistet sein.

In diesem Zusammenhang kann die Übergabeeinrichtung 15 als zweite Rutsche 16 ausgebildet sein. Dadurch kann eine besonders geringe Belastung bei dieser Übergabe gewährleistet sein.

In einer weiteren - nicht dargestellten - bevorzugten Ausführungsform kann die Führung 22 zumindest einseitig von einer Anschlagschiene begrenzt werden. Dadurch kann die Gesamtkraftkomponente des Stückgutes 5 in Längsrichtung des Stückgutes 5 zum Ausrichten des Stückgutes 5 verwendet werden, indem das Stückgut gegen die Anschlagschiene bewegt und kraftschlüssig gedrückt wird.

In diesem Zusammenhang kann alternativ vorgesehen sein, dass die Anschlagschiene in lediglich einem dem ersten Förderer zugewandten Teilbereich der Separationsvorrichtung 1 ausgebildet ist. Derart können - bei einem gleichgerichteten Drehsinn aller Schraubenförderer 2 - die Stückgüter 5 in diesem Teilbereich ausgerichtet werden und in dem Folgebereich der Separationsvorrichtung 1 in Längsrichtung beschleunigt werden. Derart können sowohl die Ausrichtung des Stückgutes 5 als auch die Verringerung der Relativgeschwindigkeit des Stückgutes 5 zum ersten Längstransporter 61 gewährleistet sein.

In einer bevorzugten Ausführungsform der Separationsvorrichtung 1 werden die Stückgüter 5 in dem Transportsystem mittels des der Separationsvorrichtung 1 vorgeschalteten ersten Quertransporters 31 quer zur Längserstreckung der Stückgüter 5 angeliefert. Mittels der ersten Rutsche 12 werden die Stückgüter 5 an mehrere, insbesondere fünf, Schraubenförderer 2 übergeben. Mittels der Separationsvorrichtung 1 kann derart ein Verfahren zum Separieren von länglichem Stückgut 5, insbesondere von Stückgütern 5 unterschiedlicher Längen und unterschiedlicher Querschnitte, durchgeführt werden.

Bei dem Verfahren zum Separieren von länglichem Stückgut 5 ist vorgesehen, dass das Stückgut 5 von wenigstens zwei nebeneinander angeordneten Schraubenförderern 2 aufgenommen wird, wobei das Stückgut 5 von wenigstens einer durch die Schraubenflächen 21 der Schraubenförderer 2 ausgebildeten gemeinsamen Führung 22 aufgenommen wird, und dass das Stückgut 5 durch eine Rotation der Schraubenförderer 2 mit einer Bewegungskomponente normal auf die Längsachse des Stückgutes 5 angetrieben wird.

Im Anschluss an das Separieren mittels der Separationsvorrichtung 1 wird das nunmehr vereinzelte Stückgut 5 nochmalig übergeben, nunmehr an den nachgeschalteten Förderer, insbesondere den ersten Längstransporter 61.

In besonders vorteilhafter Ausführung des Verfahrens kann vorgesehen sein, dass die Schraubenförderer 2 gleichsinnig angetrieben werden und das Stückgut 5 zusätzlich mit einer Bewegungskomponente in Richtung der Längsachse des Stückgutes 5 angetrieben wird.

Alternativ können jeweils zwei Schraubenförderer 2 in gegengleicher Richtung aber mit gleicher Umfangsgeschwindigkeit angetrieben werden, wobei die Schraubenflächen 21 der beiden Schraubenförderer 2 insbesondere mit gegengleicher Steigung, beispielsweise bei gleicher Ganghöhe rechtsgängig und linksgängig, ausgebildet sind. Dadurch kann die Ausbildung der Gesamtkraftkomponente und der Bewegungskomponente im Stückgut 5 in Richtung zur Längserstreckung des Stückgutes 5 weitestgehend verhindert werden, wodurch das Stückgut 5 ohne weitere Rückhaltemechanismen, beispielsweise anschlagsschienenfrei, ohne nennenswerte Bewegung in Richtung der Längserstreckung des Stückgutes 5 durch die Separationsvorrichtung 1, insbesondere von der Aufnahmeeinrichtung 11 zur Übergabeeinrichtung 15 gefördert werden kann.

In diesem Zusammenhang kann bevorzugt eine gerade Anzahl von Schneckenförderern 2 ausgebildet sein, wobei jeweils zwei Schneckenförderer 2 gegenläufig rotieren können. Derart kann bei der Förderung mittels der Schneckenförderer 2 die Gesamtkraftkomponente im Stückgut 5 in Richtung zur Längserstreckung des Stückgutes 5 besonders gering sein.

In einer weiteren, nicht dargestellten, vorteilhaften Ausführungsform können in der Anlage, insbesondere in dem Transportsystem, mehrere Separationsvorrichtungen 1 - in Transportrichtung des Stückgutes 5 gesehen - parallel nebeneinander angeordnet sein. Derart kann der Durchsatz des Transportsystems erhöht werden.

In einer dazu alternativen, nicht dargestellten, vorteilhaften Ausführungsform können in der Anlage, insbesondere in dem Transportsystem, mehrere Separationsvorrichtungen 1 - in Transportrichtung des Stückgutes 5 gesehen - seriell aufeinander nachfolgen angeordnet sein. Derart können mehrere Separationen nachfolgend durchgeführt werden, wobei zwischen zwei Separationen insbesondere ein Bearbeitungsschritt an den Stückgütern 5 erfolgen kann.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Transportsystem (4) für längliches Stückgut (5) mit einem ersten Quertransporter (31), wobei dem Quertransporter (31) - in Transportrichtung des länglichen Stückgutes (5) gesehen - eine Separationsvorrichtung (1) für das längliche Stückgut (5) nachgeschaltet ist, wobei die Separationsvorrichtung (1) wenigstens zwei nebeneinander angeordnete Schraubenförderer (2) umfasst, wobei Schraubenflächen (21) der Schraubenförderer (2) wenigstens eine gemeinsame Führung (22) für das längliche Stückgut (5) ausbilden, und wobei die Führung (22) zumindest einseitig von einer Anschlagschiene begrenzt wird, **dadurch gekennzeichnet, dass** die Anschlagschiene in lediglich einem dem Quertransporter (31) zugewandten Teilbereich der Separationsvorrichtung (1) ausgebildet ist.

2. Transportsystem nach Anspruch 1, **dadurch gekennzeichnet, dass** die Schraubenförderer (2) einen im Wesentlichen kegelförmigen Grundkörper (25) aufweisen.

3. Transportsystem nach Anspruch 1 oder 2, **dadurch gekennzeichnet, dass** die die Führung (22) ausbildenden Bereiche der Schraubenflächen (21) im Wesentlichen parallel zur Längsrichtung der Führung (22) angeordnet sind.

4. Transportsystem nach einem der Anspruche 1 bis 3, **dadurch gekennzeichnet, dass** die Schraubenförderer (2) - in Betriebslage gesehen - zum Anheben des länglichen Stückgutes (5) ausgebildet sind.

5. Transportsystem nach einem der Ansprüche 1 bis 4, **dadurch gekennzeichnet, dass** die Drehachsen (24) der Schraubenförderer (2) im Wesentlichen parallel angeordnet sind.

6. Transportsystem nach einem der Ansprüche 1 bis 5, **dadurch gekennzeichnet, dass** den Schraubenförderern (2) eine Aufnahmeeinrichtung (11) zur übernahme des länglichen Stückgutes (5) von einem ersten Quertransporter (31) vorgeschaltet ist.

7. Transportsystem nach Anspruch 6, **dadurch gekennzeichnet, dass** die Aufnahmeeinrichtung (11) als erste Rutsche (12) ausgebildet ist.

8. Transportsystem nach Anspruch 6 oder 7, **dadurch gekennzeichnet, dass** die Aufnahmeeinrichtung (11) ein Begrenzungselement (13) zur Reduzierung der wirksamen Eingriffslänge der Schraubenförderer (2) in Abhängigkeit von der Querschnittsgröße des Stückgutes (5) aufweist.

9. Transportsystem nach Anspruch 8, **dadurch gekennzeichnet, dass** das Begrenzungselement (13) ein gefedert gelagertes Hebelineal (14) umfasst.

10. Transportsystem nach einem der Ansprüche 1 bis 9, **dadurch gekennzeichnet, dass** den Schraubenförderern (2) eine Übergabeeinrichtung (15) zur Übergabe des länglichen Stückgutes (5) nachgeschaltet ist.

11. Transportsystem nach Anspruch 10, **dadurch gekennzeichnet, dass** die Übergabeeinrichtung (15) als zweite Rutsche (16) ausgebildet ist.

12. Transportsystem nach einem der Ansprüche 1 bis 11, **dadurch gekennzeichnet, dass** der Separationsvorrichtung (2) ein erster Längstransporter (61) nachgeschaltet ist.

13. Transportsystem nach einem der Ansprüche 1 bis 11, **dadurch gekennzeichnet, dass** der Separationsvorrichtung (2) ein zweiter Quertransporter nachgeschaltet ist.

14. Transportsystem nach einem der Ansprüche 1 bis 12, **dadurch gekennzeichnet, dass** alle Schraubenförderer (2) einen gleichgerichteten Drehsinn aufweisen.

## Claims

1. A conveyor system (4) for elongated piece goods (5), comprising a first cross conveyor (31), with the cross conveyor (31) being provided downstream as seen in the direction of conveyance of the elongated piece goods (5) with a separation apparatus (1) for the elongated piece goods (5), with the separation apparatus (1) comprising at least two screw conveyors (2) arranged next to one another, with the screw surfaces (21) of the screw conveyors (2) forming at least one common guide (22) for the elongated piece goods (5), and with the guide (22) being delimited at least on one side by a stop rail, **characterized in that** the stop rail is arranged in merely one partial area of the separation apparatus (1) facing the cross conveyor (31).

2. A conveyor system according to claim 1, **characterized in that** the screw conveyors (2) have a substantially conical base body (25).

3. A conveyor system according to claim 1 or 2, **characterized in that** the regions of the screw surfaces (21) forming the guide (22) are arranged substantially parallel to the longitudinal direction of the guide (22).

4. A conveyor system according to one of the claims 1 to 3, **characterized in that** the screw conveyors (2), as seen in the operating position, are arranged for lifting the elongated piece goods (5).

5. A conveyor system according to one of the claims 1 to 4, **characterized in that** the rotational axes (24) of the screw conveyors (2) are arranged substantially parallel with respect to each other.

6. A conveyor system according to one of the claims 1 to 5, **characterized in that** the screw conveyors (2) are provided upstream with a receiving device (11) for receiving the elongated piece goods (5) from a first cross conveyor (31).

7. A conveyor system according to claim 6, **characterized in that** the receiving device (11) is arranged as a first chute (12).

8. A conveyor system according to claim 6 or 7, **characterized in that** the receiving device (11) comprises a limiting element (13) for reducing the effective engagement length of the screw conveyors (2) depending on the cross-sectional size of the piece goods (5).

9. A conveyor system according to claim 8, **characterized in that** the limiting element (13) is a spring-mounted lifting manipulator (14).

10. A conveyor system according to one of the claims 1 to 9, **characterized in that** the screw conveyors (2) are provided downstream with a transfer device (15) for transferring the elongated piece goods (5).

11. A conveyor system according to claim 10, **characterized in that** the transfer device (15) is arranged as a second chute (16).

12. A conveyor system according to one of the claims 1 to 11, **characterized in that** the separation apparatus (2) is provided downstream with a first longitudinal conveyor (61).

13. A conveyor system according to one of the claims 1 to 11, **characterized in that** the separation apparatus (2) is provided downstream with a second cross conveyor.

14. A conveyor system according to one of the claims 1 to 12, **characterized in that** all screw conveyors (2) have the same direction of rotation.

## Revendications

1. Système de transport (4) pour des articles allongés (5) avec un premier transporteur transversal (31), dans lequel le transporteur transversal (31) est suivi, vu dans le sens de transport des articles allongés (5), d'un dispositif séparateur (1) pour les articles allongés (5), dans lequel le dispositif séparateur (1) comprend au moins deux convoyeurs à vis sans fin (2) disposés l'un à côté de l'autre, des surfaces de vis (21) des convoyeurs à vis sans fin (2) formant au moins un guide commun (22) pour les articles allongés (5), et dans lequel le guide (22) est délimité au moins d'un côté par un rail de butée, **caractérisé en ce que** le rail de butée est formé seulement dans une zone partielle du dispositif séparateur (1) tournée vers le transporteur transversal (31).

2. Système de transport selon la revendication 1, **caractérisé en ce que** les convoyeurs à vis sans fin (2) présentent un corps de base (25) sensiblement conique.

3. Système de transport selon la revendication 1 ou 2, **caractérisé en ce que** les zones des surfaces de vis (21) formant le guide (22) sont disposées de façon sensiblement parallèle à la direction longitudinale du guide (22).

4. Système de transport selon l'une des revendications 1 à 3, **caractérisé en ce que** les convoyeurs à vis sans fin (2), vus dans la position de fonctionnement, sont conçus pour soulever les articles allongés (5).

5. Système de transport selon l'une des revendications 1 à 4, **caractérisé en ce que** les axes de rotation (24) des convoyeurs à vis sans fin (2) sont sensiblement parallèles.

6. Système de transport selon l'une des revendications 1 à 5, **caractérisé en ce que** les convoyeurs à vis sans fin (2) sont précédés par un dispositif de prise en charge (11) pour la prise en charge des articles allongés (5) à partir d'un premier transporteur transversal (31).

7. Système de transport selon la revendication 6, **caractérisé en ce que** le dispositif de prise en charge (11) est conçu comme une première glissière (12).

8. Système de transport selon la revendication 6 ou 7, **caractérisé en ce que** le dispositif de prise en charge (11) présente un élément limiteur (13) pour réduire la longueur de prise active des convoyeurs à vis sans fin (2) en fonction de la taille en section des articles allongés (5),

9. Système de transport selon la revendication 8, **caractérisé en ce que** l'élément limiteur (13) est une règle de levage (14) supportée de façon élastique.

10. Système de transport selon l'une des revendications 1 à 9, **caractérisé en ce que** les convoyeurs à vis (2) sont suivis d'un dispositif de transfert (15) pour le transfert des articles allongés (5).

11. Système de transport selon la revendication 10, **caractérisé en ce que** le dispositif de transfert (15) est conçu comme une deuxième glissière (16).

12. Système de transport selon l'une des revendications 1 à 11, **caractérisé en ce que** le dispositif séparateur (2) est suivi d'un premier transporteur longitudinal (61).

13. Système de transport selon l'une des revendications 1 à 11, **caractérisé en ce que** le dispositif séparateur (2) est suivi d'un deuxième transporteur transversal.

14. Système de transport selon l'une des revendications 1 à 12, **caractérisé en ce que** tous les convoyeurs à vis sans fin (2) ont un même sens de rotation.
